# EUROPEAN PATENT SPECIFICATION

(11) **EP 3 860 251 B1**
(45) Date of publication and mention of the grant of the patent: **04.06.2025**
(21) Application number: 18935717.1
(22) Date of filing: 27.09.2018
(51) Int. Cl.: H04W 72/04, H04W 16/28, H04W 56/00, H04W 92/18, H04L 5/00

(54) **USER EQUIPMENT AND COMMUNICATION METHOD**
BENUTZERGERÄT UND KOMMUNIKATIONSVERFAHREN
ÉQUIPEMENT UTILISATEUR ET PROCÉDÉ DE COMMUNICATION

(43) Date of publication of application: 04.08.2021
(73) Proprietor: NTT DOCOMO, INC., Chiyoda-ku Tokyo 100-6150 (JP)
(72) Inventor: OHARA, Tomoya, Tokyo 100-6150 (JP); OSAWA, Ryosuke, Tokyo 100-6150 (JP)
(74) Representative: Hoffmann Eitle
(86) International application number: PCT/JP2018/036125
(87) International publication number: WO 2020/065886

(56) References cited:
- EP-A1- 3 099 123
- EP-A1- 3 169 128
- JP-A- 2017 532 879
- NTT DOCOMO ET AL: "Synchronization mechanism", vol. RAN WG1, no. Gothenburg, Sweden; 20180820 - 20180824, 11 August 2018 (2018-08-11), XP051516528, Retrieved from the Internet <URL:http://www.3gpp.org/ftp/tsg%5Fran/WG1%5FRL1/TSGR1%5F94/Docs/R1%2D1809158%2Ezip> [retrieved on 20180811]
- ITL: "Discussion on NR V2X Synchronization mechanism", vol. RAN WG1, no. Gothenburg, Sweden; 20180820 - 20180824, 17 August 2018 (2018-08-17), XP051516837, Retrieved from the Internet <URL:http://www.3gpp.org/ftp/tsg%5Fran/WG1%5FRL1/TSGR1%5F94/Docs/R1%2D1809475%2Ezip> [retrieved on 20180817]
- NTT DOCOMO, INC.: "Synchronization mechanism", 3GPP TSG RAN WG1 #94 R1-1809158, 24 August 2018 (2018-08-24), XP051516528, Retrieved from the Internet <URL:http://www.3gpp.org/ftp/tsg_ran/WG1_RL1/TSGR1_94/Docs/Rl-1809158.zip> [retrieved on 20181105]
- ITL: "Discussion on NR V2X Synchronization mechanism", 3GPP TSG RAN WG1 #94 R1-1809475, 24 August 2018 (2018-08-24), XP051516837, Retrieved from the Internet <URL:http://www.3gpp.org/ftp/tsg_ran/WG1_RL1/TSGR1_94/Docs/Rl-1809475.zip> [retrieved on 20181105]
- ETRI: "Discussion on NR V2X sidelink synchronization", 3GPP TSG RAN WG1 #94 R1-1808814, 24 August 2018 (2018-08-24), XP051516187, Retrieved from the Internet <URL:http://www.3gpp.org/ftp/tsg_ran/WG1_RL1/TSGR1_94/Docs/R1-1808814.zip> [retrieved on 20181105]

## Description

### TECHNICAL FIELD

The present invention relates to user equipment and a communication method in a radio communication system.

### BACKGROUND ART

For LTE (Long Term Evolution) and LTE successor systems (e.g., LTE-A (LTE Advanced), NR (New Radio) (which is also referred to as 5G), D2D (Device to Device) technology has been studied in which units of user equipment directly communicate without going through a base station apparatus (e.g., Non-Patent Document 1).

D2D reduces traffic between user equipment and a base station apparatus, and D2D allows communication between units of user equipment, even if a base station apparatus is unable to communicate during a disaster or the like. In 3GPP (3rd Generation Partnership Project), D2D is referred to as "sidelink." However, in this specification, a more generic term, D2D, is used. Note that, in the embodiments described below, "sidelink" is also used, if necessary.

D2D communication is broadly classified into D2D discovery (which may also be referred to as D2D discovery or D2D detection) for detecting another unit of user equipment that is capable of communicating; and D2D communication (which may also be referred to as D2D direct communication, D2D communication, inter-terminal direct communication, or the like) for direct communication between units of user equipment. In the following, if D2D communication, D2D discovery, and the like are not particularly distinguished, they are simply referred to as D2D. Furthermore, signals transmitted and received in D2D are referred to as D2D signals. Various use cases of services related to NR V2X (Vehicle to Everything) have been studied (e.g., Non-Patent Document 2).

### Related Art Document

### [Non-Patent Document]

Non-Patent Document 1: 3GPP TS 36.211 V15.2.0(2018-06)
Non-Patent Document 2: 3GPP TR 22.886 V15.1.0(2017-03)
Document EP 3 099 123 A1 relates to a method for transmitting a synchronization signal and a synchronization channel in a wireless communication system supporting Device-to-Device (D2D) communication; and an apparatus for the method. The method comprises mapping the D2D synchronization signal and the D2D synchronization channel to a physical resource; and transmitting the mapped D2D synchronization signal and D2D synchronization channel to a UE, wherein the D2D synchronization signal is mapped to 64 subcarriers in the frequency domain, and the D2D synchronization channel is mapped to the same resource block as the D2D synchronization signal.
Document NTT DOCOMO et al.: "Synchronization mechanism" 3GPP DRAFT, R1-1809158 relates to sidelink synchronization mechanism.
Document ITL: "Discussion on NR V2X Synchronization mechanism", 3GPP DRAFT, R1-1809475 relates to synchronization mechanism for NR V2X.
Document EP 3 169 128 A1 relates to a method and an apparatus for D2D signal transmission of a first terminal in a wireless communication system. The method comprises the steps of: receiving a resource pool configuration indicating a D2D resource pool; and transmitting a D2D data channel on the basis of a D2D slot number which is re-indexed within the D2D resource pool.

### SUMMARY OF THE INVENTION

### [PROBLEM TO BE SOLVED BY THE INVENTION]

For performing D2D communication in a high frequency band, it is expected that a synchronization signal and broadcast information are transmitted using beam forming. If different beams are used for different resources, respectively, an overhead for reporting a resource for transmitting a synchronization signal and broadcast information may be increased.

There is a need for reducing an overhead for reporting a resource for transmitting a synchronization signal and broadcast information in inter-terminal direct communication.

### [MEANS FOR SOLVING THE PROBLEM]

The invention is defined by the appended claims.

### [ADVANTAGE OF THE INVENTION]

According to an embodiment, an overhead for reporting a resource for transmitting a synchronization signal and broadcast information can be reduced in inter-terminal direct communication.

### BRIEF DESCRIPTION OF DRAWINGS

Fig. 1 is a diagram for illustrating V2X;
Fig. 2 is a diagram for illustrating an example of allocation of a sidelink synchronization signal and sidelink broadcast information;
Fig. 3 is a diagram illustrating an example of a radio communication system in an embodiment;
Fig. 4 is a diagram illustrating an example of a radio communication system in an embodiment;
Fig. 5A is a diagram illustrating an example of a configuration of an SL-SSB resource in an embodiment;
Fig. 5B is a diagram illustrating an example of a configuration of an SL-SSB resource in an embodiment;
Fig. 5C is a diagram illustrating an example of a configuration of an SL-SSB resource in an embodiment;
Fig. 6A is a diagram illustrating an example of a configuration of an SL-SSB resource in an embodiment;
Fig. 6B is a diagram illustrating an example of a configuration of an SL-SSB resource in an embodiment;
Fig. 7 is a diagram illustrating an example of a configuration of an SL-SSB resource in an embodiment;
Fig. 8 is a diagram illustrating an example of allocating an SL-SSB by excluding a DL domain in an embodiment;
Fig. 9 is a diagram illustrating an example of a configuration of an SL-SSB resource in an embodiment;
Fig. 10 is a diagram indicating an example of a functional configuration of a base station apparatus 10 in an embodiment of the present invention;
Fig. 11 is a diagram indicating an example of a functional configuration of a user equipment 20 in an embodiment of the present invention; and

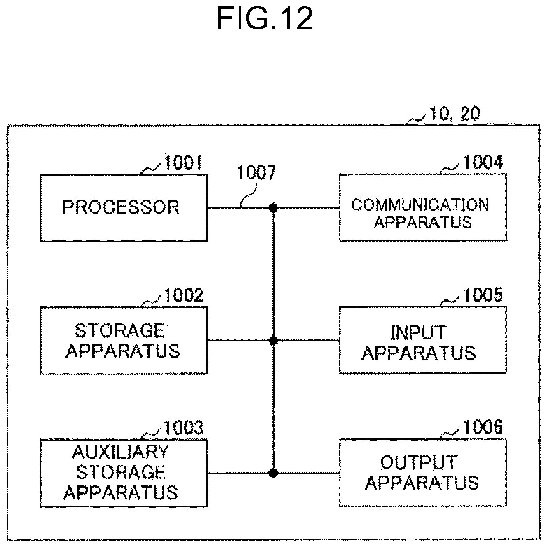

Fig. 12 is a diagram indicating an example of a hardware configuration of a base station apparatus 10 or a user equipment 20 in an embodiment of the present invention.

### [EMBODIMENTS OF THE INVENTION]

In the following, embodiments of the present invention are described by referring to the drawings. The embodiments described below are an example, and embodiments to which the present invention is applied are not limited to the following embodiments.

In an operation of a radio communication system of the embodiments of the present invention, existing technology is appropriately used. Here, the existing technology is, for example, existing LTE but not limited to existing LTE. Further, the term "LTE" used in this specification has a broad meaning including LTE-Advanced and a system subsequent to LTE-Advanced (for example, NR), or a wireless LAN (Local Area Network) unless as otherwise specified.

In the embodiments of the present invention, a duplex method may be a TDD (Time Division Duplex) method, an FDD (Frequency Division Duplex) method, or any other method (e.g., Flexible Duplex, etc.).

In the following description, a method of transmitting a signal using a transmission beam may be digital beam forming of transmitting a signal (pre-coded with a pre-coding vector) multiplied by a pre-coding vector or may be analog beam forming for implementing beam forming using a variable phase shifter in a radio frequency (RF) circuit. Similarly, a method of receiving a signal using a reception beam may be digital beam forming of multiplying a received signal by a predetermined weight vector or may be analog beam forming of implementing beam forming using a variable phase shifter in a RF circuit. Hybrid beam forming in which digital beam forming and analog beam forming are combined may be applied to transmission and reception. Furthermore, transmitting a signal using a transmission beam may be transmitting a signal through a specific antenna port. Similarly, receiving a signal using a reception beam may be receiving a signal through a particular antenna port. An "antenna port" refers to a logical antenna port or a physical antenna port defined in the 3GPP standard. In addition, a precoding or the beam forming is also referred to as a "pre-coder" or a "spatial domain filter."

A method of forming the transmission beam and the reception beam is not limited to the above-described methods. For example, in a base station apparatus 10 or a user equipment 20, which are included in the radio communication system according to an embodiment of the present invention, provided with a plurality of antennas, a method of changing an angle of each antenna may be used, a method in which a method using a precoding vector and a method of changing an angle of an antenna are combined may be used, a method of switching and using different antenna panels may be used, a method of using a combination of a plurality of antenna panels may be used, or any other method may be used. Furthermore, for example, a plurality of different transmission beams may be used in a high frequency band. Using a plurality of transmission beams is referred to as a multi-beam operation, and using a single transmission beam is referred to as a single beam operation.

Furthermore, in an embodiment of the present invention, when a radio parameter or the like is "configured", it may mean that a predetermined value is "pre-configured" or it may mean that a radio parameter provided by notification from the base station apparatus 10 or the user equipment 20 is configured.

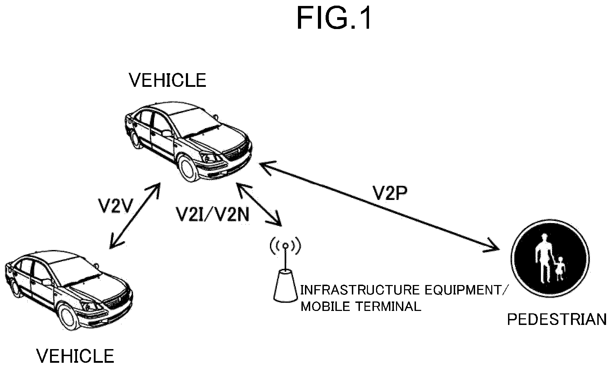

Fig. 1 is a diagram for illustrating V2X. In 3GPP, implementing vehicle to everything (V2X) or enhanced V2X (eV2X) by extending a D2D function is under review, and technical specification documentation development thereof is in progress. As illustrated in Fig. 1, V2X is a part of intelligent transport systems (ITS) and is a generic term of vehicle to vehicle (V2V) meaning a communication form performed between vehicles, vehicle to infrastructure (V2I) meaning a communication form performed between a vehicle and a road-side unit (RSU) installed on a road side, vehicle to Nomadic device (V2N) meaning a communication mode performed between a vehicle and a mobile terminal carried by the driver, and vehicle to pedestrian (V2P) meaning a communication mode performed between a vehicle and a mobile terminal carried by a pedestrian.

Furthermore, in 3GPP, V2X has been studied that uses cellular communication and inter-terminal communication according to LTE or NR. It is assumed that, in V2X according to LTE or NR, a study that is not limited to the 3GPP specification will be progressed. For example, it is expected that the following items will be studied: ensuring interoperability; cost efficiency for implementing a higher layer; combining or switching multiple RATs (Radio Access Technologies); supporting regulation in each country; and data retrieving, delivering, database management, and use of a V2X platform according to LTE or NR.

In the embodiments of the present invention, a form in which the communication device is installed on a vehicle is mainly assumed, but embodiments of the present invention are not limited to this form. For example, the communication device may be a terminal carried by a person, the communication device may be a device installed in a drone or an aircraft, and the communication device may be a base station, an RSU, a relay station (relay node), a user equipment provided with scheduling capability, or the like.

Note that sidelink (SL) may be distinguished from uplink (UL) or downlink (DL) based on one of the following 1) to 4) or a combination thereof. Furthermore, SL may have any other name.
1) A resource allocation in a time domain
2) A resource allocation in a frequency domain
3) A synchronization signal to be referred to (including a sidelink synchronization signal (SLSS))
4) A reference signal used for path loss measurement for transmission power control.

Furthermore, for orthogonal frequency division multiplexing (OFDM) of SL or UL, any one of cyclic-prefix OFDM (CP-OFDM), discrete Fourier transform-spread-OFDM (DFT-S-OFDM), OFDM without transform precoding, and OFDM with transform precoding may be applied.

In SL of LTE, Mode 3 and Mode 4 are specified for SL resource allocation to the user equipment 20. In Mode 3, transmission resources are dynamically allocated in accordance with downlink control information (DCI) transmitted from the base station apparatus 10 to the user equipment 20. In Mode 3, semi persistent scheduling (SPS) can be performed as well. In Mode 4, the user equipment 20 autonomously selects transmission resources from a resource pool.

A slot in an embodiment of the present invention may be replaced with a mini slot, a subframe, a radio frame, a transmission time interval (TTI), or the like. Furthermore, a cell in an embodiment of the present invention may be replaced with a cell group, a carrier component, a BWP, a resource pool, a resource, a Radio Access Technology (RAT), or a system (including a wireless LAN) .

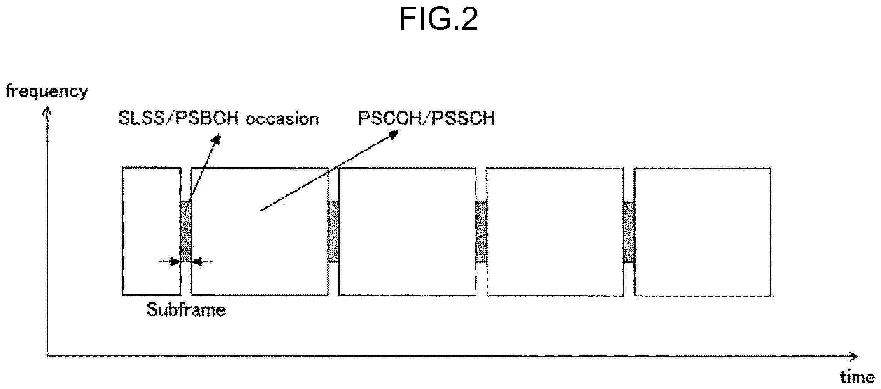

Fig. 2 is a diagram for illustrating an example of allocation of a sidelink synchronization signal and sidelink broadcast information. In LTE V2X, a sidelink synchronization signal (SLSS) which is the synchronization signal and a physical sidelink broadcast channel (PSBCH) which is a channel in which the broadcast information is transmitted are transmitted by the user equipment 20, and another unit of the user equipment 20 can establish synchronization using the SLSS transmitted from the user equipment 20. For example, since a user equipment 20 located outside coverage of the base station apparatus 10 is unable to use, directly, a synchronization signal from the base station apparatus 10, there is a case in which the user equipment 20 establishes synchronization using a synchronization signal transmitted from another user equipment 20.

As illustrated in Fig. 2, a transmission occasion of SLSS and PSBCH (SLSS/PSBCH occasion) in LTE V2X occupies the entire subframe. A physical sidelink control channel (PSCCH) or a physical sidelink shared channel (PSSCH) is not multiplexed with a transmission occasion of SLSS and PSBCH in the time domain.

In NR V2X, it has been studied to include SLSS and PSBCH in a signal for sidelink synchronization. Furthermore, the synchronization source may be, for example, a global navigation satellite system (GNSS), a next generation Node-B (gNB), an enhanced Node-B (eNB), a user equipment (NR-UE) or an LTE-UE.

Here, in NR V2X, in addition to a case in which a band used for normal DL or UL between the base station apparatus 10 and the user equipment 20 and a band used for SL of V2X are independent, a case has been studied in which a common band is used for DL, UL, and SL. In the case in which the common band is used for DL, UL, and SL, it is assumed that an amount of resource available in SL or positions of assignable resources are limited.

In NR V2X, it is assumed that SL communication is performed in frequency range 2 (FR2). In a high frequency band, such as FR2, SLSS and PSBCH are assumed to be transmitted using beam forming. When different beams are used for different resources, respectively, an amount of a resource required for transmitting SLSS and PSBCH may be increased. Alternatively, repetitive transmission (repetition) intended for combined reception of the SLSS and the PSBCH may be performed, and an amount of a resource required for transmitting the SLSS and the PSBCH may increase. A signal including signals corresponding to SLSS (Sidelink synchronization signal) and PSBCH (Physical Sidelink Broadcast Channel) may be referred to as an SL SS block, an SL SS/PSBCH block, or the like. In the following, a signal including an SLSS and a PSBCH is referred to as an "SL-SSB." The SL-SSB may include a DM-RS or the like used for demodulating the PSBCH. In the following, a signal including a DL SS and a DL PBCH (Physical Broadcast Channel) is referred to as a "DL-SSB."

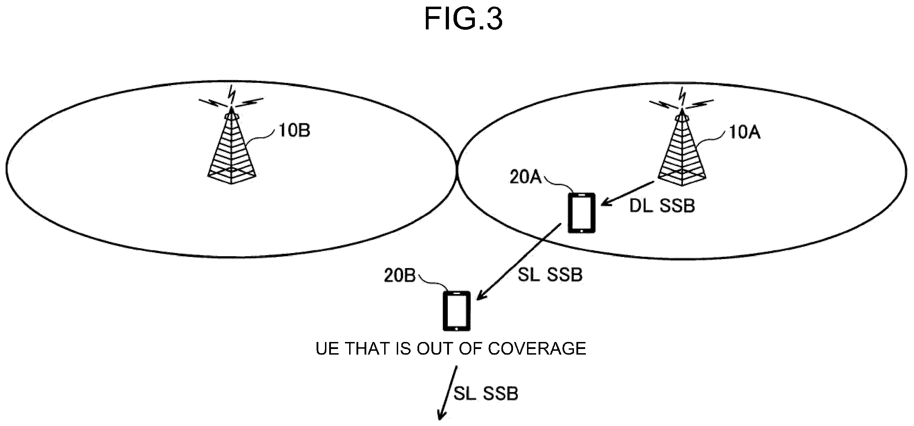

Fig. 3 is a diagram illustrating an example of a radio communication system in an embodiment of the present invention. As described above, in NR V2X, an amount of a resource required for transmitting the SL-SSB may be increased. Accordingly, for example, the user equipment 20 may transmit the SL-SSB using a resource of a channel already allocated for DL or UL. By using the resource of the channel already allocated for DL or UL, the user equipment 20 can transmit the SL-SSB without newly securing a resource dedicated to the SL-SSB.

As illustrated in Fig. 3, the user equipment 20A located within coverage of the base station apparatus 10A receives a DL-SSB from the base station apparatus 10A. The user equipment 20A transmits an SL-SSB with the base station apparatus 10A as a synchronization source to the user equipment 20B located outside the coverage. Furthermore, the user equipment 20B may transmit an SL-SSB with the user equipment 20A as a synchronization source.

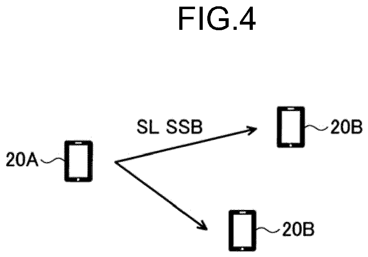

Furthermore, as illustrated in Fig. 4, in a case where the user equipment 20A and the user equipment 20B are out of coverage of the base station apparatus 10A, the user equipment 20A and the user equipment 20B are unable to receive broadcast information from the base station apparatus 10A. In such a case, the user equipment 20A may transmit a SL-SSB to the user equipment 20B, by using SL-SSB resource information that is preconfigured in a terminal or a SIM (Subscriber Identity Module). By doing this, synchronization is established between the user equipment 20A and the user equipment 20B, and the sidelink communication can be performed between the user equipment 20A and the user equipment 20B.

In the following, an example of a method is described that is for indicating information for specifying an SL-SSB resource for transmitting an SL-SSB from the user equipment 20. As illustrated in Fig. 3, the information for specifying an SL-SSB resource may be indicated by the base station apparatus 10A to the user equipment 20A. Alternatively, as illustrated in Fig. 4, the information for specifying an SL-SSB resource may be indicated by the user equipment 20A to the user equipment 20B. Additionally or alternatively, the information for specifying an SL-SSB resource may be preinstalled in the user equipment 20 or a SIM card to be attached to the user equipment 20. The information for specifying an SL-SSB resource may be information that is previously indicated to the user equipment 20 and that is maintained by the user equipment 20. The information for specifying an SL-SSB resource may be indicated or specified using any signal of an RRC, a MAC, and a DCI/SCI. In indicating or specifying the information for specifying an SL-SSB resource, any channel, among a PBCH (Physical Broadcast Channel), a PDCCH (Physical Downlink Control Channel), a PDSCH (Physical Downlink Shared Channel), a PSBCH (Physical Sidelink Broadcast Channel), a PSDCH (Physical Sidelink Discovery Channel), a PSSCH (Physical Sidelink Shared Channel), and a PSCCH (Physical Sidelink Control Channel), may be used.

### (Example 1)

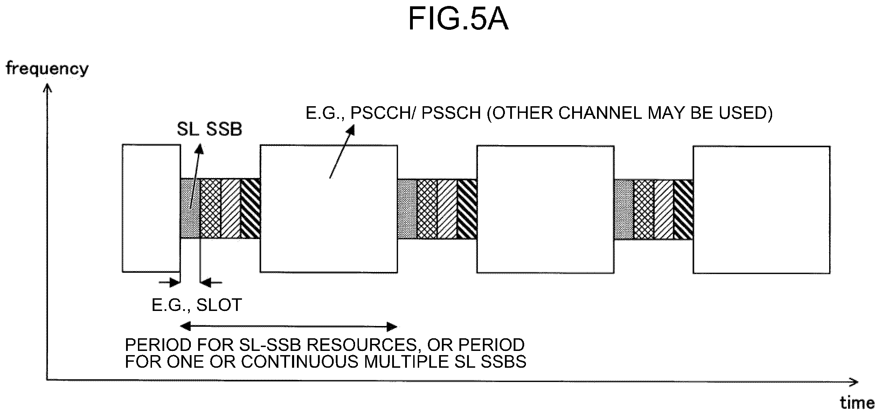

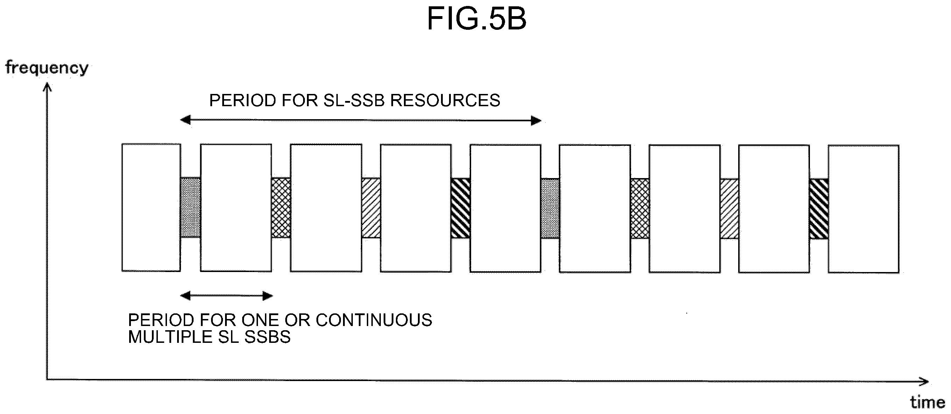

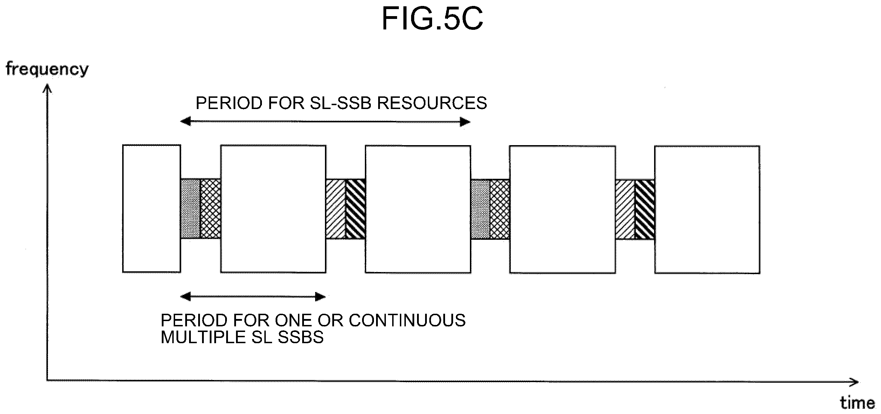

In the following, Example 1 of a method is described that is for indicating information for specifying an SL-SSB resource for transmitting an SL-SSB. Example 1 is an example for indicating information for specifying various SL-SSB resources, such as those illustrated in Fig. 5A, Fig. 5B, and Fig. 5C. Fig. 5A illustrates an example in which SL-SSBs are transmitted using four different beams, and such SL-SSB transmission using four different beams is periodically performed. Fig. 5B illustrated an example in which SL-SSBs are periodically transmitted with one SL-SSB being transmitted in each period. In Fig. 5B, SL-SSBs in corresponding periods may be transmitted using different beams. Fig. 5C illustrates an example in which SL-SSBs are periodically transmitted with one SL-SSB being transmitted in each period. In Fig. 5C, in each period, two different beams may be used for transmitting two SL-SSBs.

In Fig. 5A, Fig. 5B, and Fig. 5C, four different beams are used for transmitting four SL-SSBs. However, the number of different beams is not limited to four. Five or more SL-SSBs may be transmitted using five or more beams, respectively. Less than four SL-SSBs may be transmitted using less than four beams. In particular, when radio waves with narrow coverage, such as millimeter waves, are used, the coverage can be extended by applying a plurality of beams.

As illustrated in the examples of Fig. 5A, Fig. 5B, and Fig. 5C, an SL-SSB resource group may be defined to be one set of a plurality of SL-SSB resources for transmitting a plurality of SL-SSBs to which one set of different plurality of beams is applied. Alternatively, an SL-SSB resource group may be defined to be one set of a plurality of SL-SSB resources for transmitting, by the same beam, a plurality of repeated SL-SSBs including the same information, which is for extending coverage. In Example 1 of the method of indicating the information for specifying an SL-SSB resource for transmitting an SL-SSB, any one of the following items 1 through 8, or more than one item of the following items 1 through 8 may be indicated (or specified) to the user equipment 20.

### (Item 1)

This item refers to a starting location of an SL-SSB resource group. For example, in addition to a radio frame number (system frame number), a slot offset or a symbol offset from a starting location of a radio frame specified by the radio frame number may be indicated, or both of the slot offset or the symbol offset may be indicated in addition to the radio frame number.

### (Item 2)

This item refers to the number of consecutively allocated SL-SSB resources in a SL-SSB resource group. As the number of consecutively allocated SL-SSB resources, only the number of SL-SSB resources consecutively allocated in a time direction may be specified. Alternatively, as the number of consecutively allocated SL-SSB resources, only the number of SL-SSB resources consecutively allocated in a frequency direction may be specified. Alternatively, as the number of consecutively allocated SL-SSB resources, both of the number of SL-SSB resources consecutively allocated in the time direction, and the number of SL-SSB resources consecutively allocated in the frequency direction may be specified. Alternatively or additionally, as the number of consecutively allocated SL-SSB resources, a total number of SL-SSB resources, which includes SL-SSB resources consecutively allocated in a time direction, and SL-SSB resources consecutively allocated in a frequency direction, may be specified.

### (Item 3)

This item refers to the number of SL-SSBs included in an SL-SSB resource group. In the examples of Fig. 5A, Fig. 5B, and Fig. 5C, as the number of SL-SSBs included in the SL-SSB resource group, 4 may be specified.

### (Item 4)

This item refers to a period of an SL-SSB resource group. For example, an absolute time may be specified, as a period. Alternatively, the number of slots or the number of symbols may be specified, as a period.

### (Item 5)

As illustrated in Fig. 5B, this item refers to a period of an SL-SSB resource group in a case in which an SL-SSB is transmitted one by one. Alternatively, as illustrated in Fig. 5C, this item refers to a period of a SL-SSB resource group in a case in which multiple SL-SSB resources are consecutively allocated, but, unlike the case of Fig. 5A, the number of consecutively allocated SL-SSB resources is less than the number of SL-SSBs included in the SL-SSB resource group. For example, as the period, an absolute time may be specified, as the period, or the number of slots or the number of symbols may be specified, as the period. Note that in a case where another SL-SSB resource group is allocated after one SL-SSB resource group, a period of one SL-SSB resource group allocated ahead with respect to the time may be different from a period of one SL-SSB resource group allocated behind with respect to the time.

### (Item 6)

This item refers to a starting location of a SL-SSB resource group in a frequency direction. In LTE V2X, an SLSS and an PSBCH occupy a whole subframe and are multiplexed. In contrast, in NR, a frequency band that is occupied by an SLSS and a PSBCH may fluctuate. Accordingly, a case is assumed in which it is required to specify a starting location in the frequency direction of the SL-SSB resource group. The starting location may be specified as a location in the frequency direction within a Bandwidth Part, as a location in the frequency direction within a carrier, or as a location in the frequency direction based on another reference point.

### (Item 7)

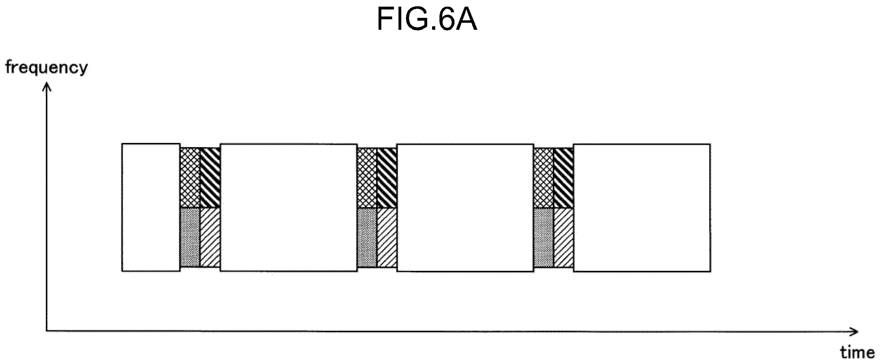

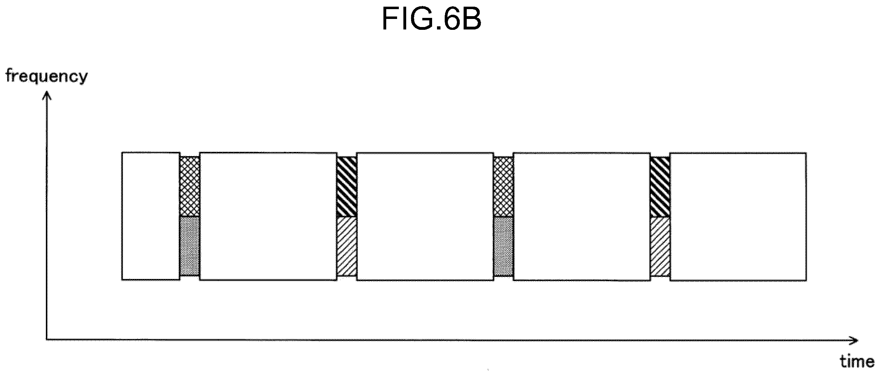

This item refers to a spacing between adjacent SL-SSB resources in a case in which multiple SL-SSB resources are allocated in a frequency direction. For example, as illustrated in Fig. 6A and Fig. 6B, a plurality of SL-SSB resources is assumed to be consecutively allocated in the frequency direction. In such a case, it may be specified that a plurality of SL-SSB resources are consecutively allocated in the frequency direction.

### (Item 8)

This item refers to information of a Bandwidth Part in which a SL-SSB resource group is allocated. The information of the Bandwidth Part may be specified as a Bandwidth Part ID, or may be specified by a location, a range, etc., in the frequency direction of the Bandwidth Part.

A plurality of SL-SSBs transmitted with different SL-SSB resources in an SL-SSB resource group may indicate the same information, or may indicate respective different information items. Furthermore, a plurality of SL-SSBs transmitted with respective different SL-SSB resources in an SL-SSB resource group may be transmitted by the same beam, or may be transmitted by respective different beams.

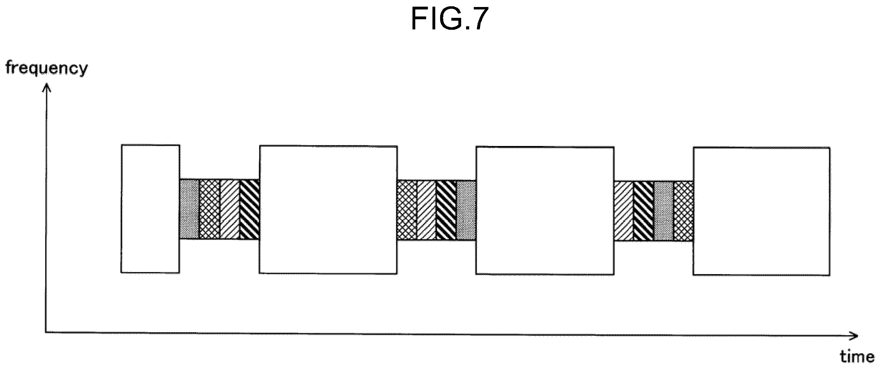

Information transmitted by a plurality of SL-SSBs transmitted with respective different SL-SSB resources in an SL-SSB resource group may be the same for each period, or may be different for each period. Order of beams applied to a plurality of SL-SSBs transmitted with respective different SL-SSB resources in an SL-SSB resource group may be the same for each period, or may be different for each period, as illustrated in Fig. 7, for example. In this case, the order of the beams may be cyclically switched by applying a cyclic shift. For example, when LTE sidelink communication and NR sidelink communication coexist, since LTE traffic is periodic traffic, the LTE sidelink communication and transmission of the above-described plurality of SL-SSBs may collide at the same time and frequency position. In such a case, by applying different information items and beams periodically, an effect of the collision can be reduced.

Furthermore, if an indication (or specification) of any one item of the above-described item 1 through item 8, or an indication (or specification) of two or more items of the above-described item 1 through item 8 is regarded as one set of an allocation of an SL-SSB resource group, a plurality of sets of allocations of SL-SSB resource groups may be indicated (or specified). For example, three sets of allocations of SL-SSB groups may be indicated (or specified) to the user equipment 20, and the user 20 may transmit SL-SSBs in one set of the three sets of the SL-SSB groups, or the user equipment 20 may transmit SL-SSBs in more than one set of the three sets of the SL-SSB groups.

### (Example 2)

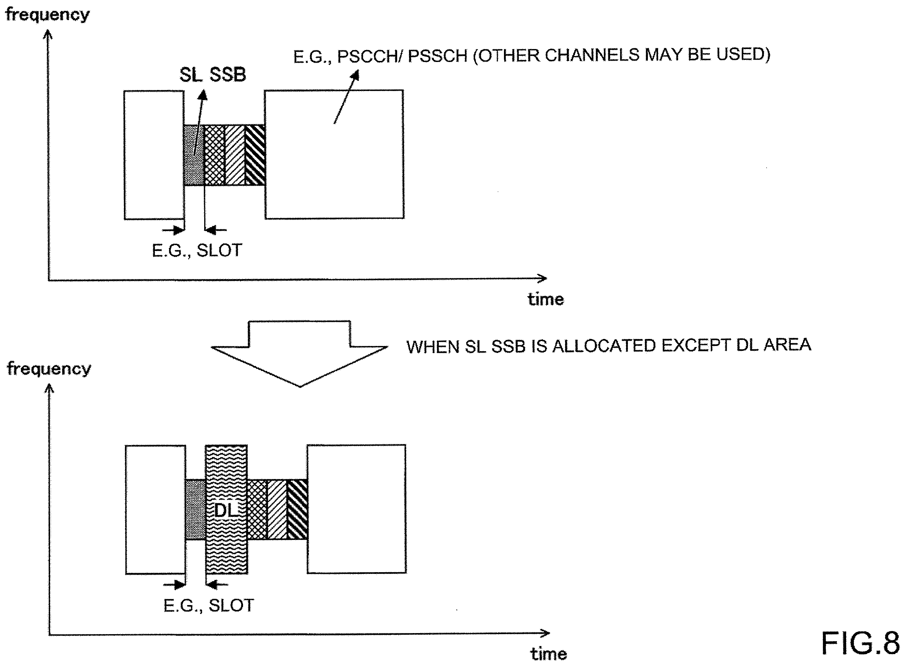

By referring to Fig. 8, Example 2 of a method is described that is for indicating information for specifying an SL-SSB resource for transmitting an SL-SSB. In Example 2, similar to Example 1, any one or more of item 1 through item 8 described above may be indicated (or specified) to the user equipment 20. The user equipment 20 excludes a portion of an SL-SSB resource based on an indicated TDD configuration, or a location of a DL-SSB. An example of this exclusion is illustrated in Fig. 8. For example, a resource for SL transmission that overlaps an area other than UL may be excluded, a resource for SL transmission that overlaps an SSB symbol to be transmitted may be excluded, or a resource for SL transmission that overlaps an area other than an SSB symbol to be transmitted may be excluded.

In Example 2, the user equipment 20 allocates an SL-SSB resource, which were to be allocated in a location of the SL-SSB resource that is excluded as described above, at a time and frequency location at which the SL-SSB resource can be subsequently allocated. This example is illustrated in Fig.8. The SL-SSB resource, which is supposed to be allocated at the location of the DL resource illustrated in Fig. 8, is allocated at a time and frequency location that follows the location of the DL resource with respect to time.

As a modified example of Example 2, SL-SSB resource locations may be determined irrespectively of the above-described exclusion of an SL-SSB resource, and there may be no SL-SSB resource at the excluded portion.

As described above, by excluding a part of an SL-SSB resource based on an indicated TDD configuration or a location of a DL-SSB, the likelihood that a transmission of an SL-SSB will be interfered can be reduced, or the likelihood that a transmission of an SL-SSB will case interference can be reduced. Furthermore, by the indication of any item of item 1 through item 8 of Example 1, an overhead for indicating information for specifying an SL-SSB resource can be reduced. If it were attempted to reduce a likelihood that a transmission of an SL-SSB is interfered in a case in which an SL-SSB is not excluded as in Example 2, it would be required to indicate information of a plurality of offsets so as to specify a plurality of SL-SSB resources, and a number of bits for indicating the SL-SSB resources could be increased.

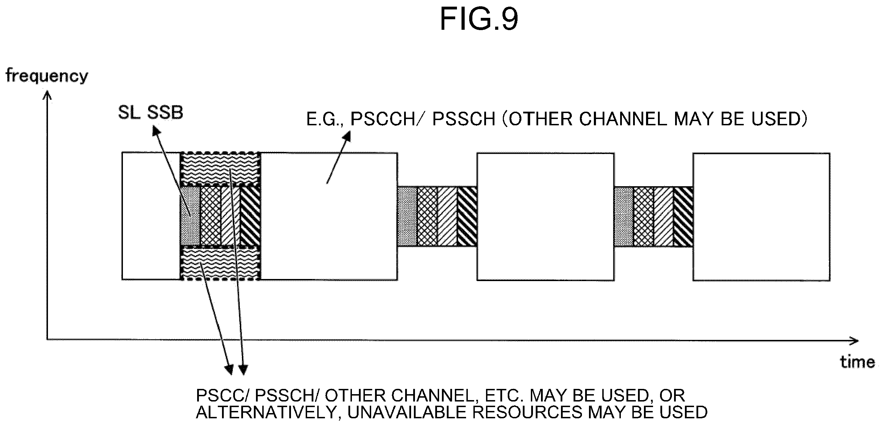

Furthermore, for LTE, it is specified that, at a location of an SL-SSB, data or the like is not allocated at a position other than the position of the SL-SSB in the frequency direction. In this regard, as illustrated in Fig. 9, for NR, a PSCCH, a PSSCH, or another channel may be allocated, or the resource may be an unused resource similar to the case of LTE.

In the embodiments of the present invention, a signal configuration of an SL-SSB may be the same as that of a DL-SSB, or may be a newly specified signal configuration for SL. A signal configuration that is the same as that of the DL-SSB may be a signal configuration that is the same as that of the DL SSB corresponding to an SSB index that is received and used for synchronization.

In the embodiments of the present invention, the signaling for indication or specification may be any signaling of RRC, MAC, DCI (Downlink Control Information), or SCI (Sidelink Control Information). Furthermore, the signaling may be transmitted through any channel of PBCH, PDCCH, PDSCH, PSBCH, PSDCH, PSSCH, and PSCCH. Namely, the user equipment 20 may receive signaling from the base station apparatus 10, or the user equipment 20 may receive signaling from another user equipment 20. Furthermore, the signaling may be Pre-configured. For example, the signaling may be based on information that is preinstalled in a SIM card or a terminal, or the signaling may be based on information that is previously indicated and maintained.

According to the above-described embodiments, even if a resource available in sidelink is shared with downlink or uplink, the user equipment 20 can transmit a signal used for sidelink synchronization using an appropriate resource. Further, the user equipment 20 can effectively utilize a resource by transmitting SL-SSB using a resource of DL-SSB not reaching in the vicinity of the user equipment 20.

In other words, in the inter-terminal direct communication, user equipment can transmit a synchronization signal and broadcast information using a shared resource.

### (Device configuration)

Next, a functional configuration example of each of the base station apparatus 10 and the user equipment 20 that execute the processes and the operation described so far is described. Each of the base station apparatus 10 and the user equipment 20 has the function of implementing the embodiments. Here, each of the base station apparatus 10 and the user equipment 20 may have only some of the functions in the embodiments.

### <Base station apparatus 10>

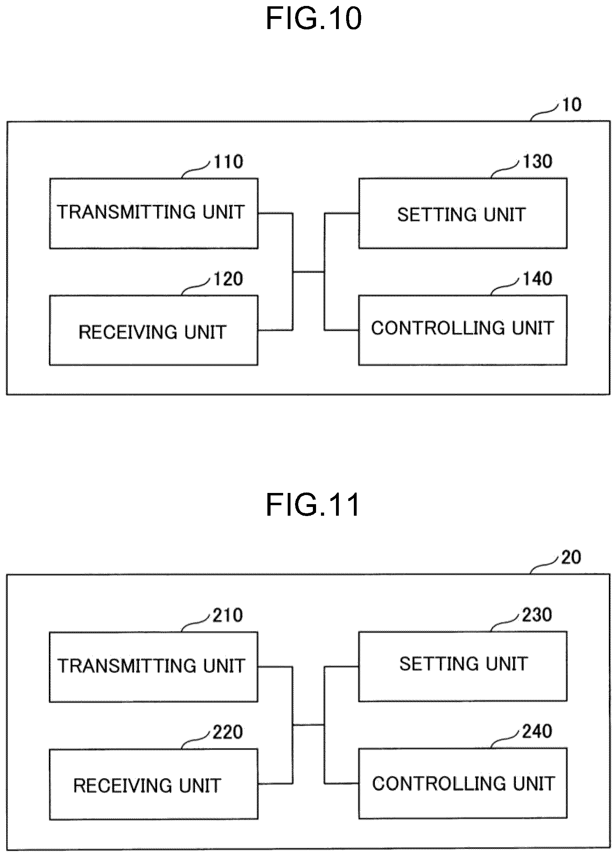

Fig. 10 is a diagram illustrating an example of a functional configuration of the base station apparatus 10. As illustrated in Fig. 10, the base station apparatus 10 has a transmitting unit 110, a receiving unit 120, a setting unit 130, and a controlling unit 140. The functional configuration illustrated in Fig. 10 is merely an example. As long as the operation according to the embodiments of the present invention can be executed, the functional classification and the name of the functional unit may be any classification and name.

The transmitting unit 110 has a function of generating a signal to be transmitted to the user equipment 20 and transmitting the signal wirelessly. The receiving unit 120 has a function of receiving various types of signals transmitted from the user equipment 20 and acquiring, for example, information of a higher layer from the received signals. The transmitting unit 110 has a function of transmitting the NR-PSS, the NR-SSS, the NR-PBCH, the DL/UL control signal, the DL reference signal or the like to the user equipment 20.

The setting unit 130 stores pre-configured configuration information and various types of configuration information to be transmitted to the user equipment 20 in the storage device and reads the configuration information from the storage device if necessary. For example, content of the configuration information is, for example, information related to a configuration of the D2D communication or the like.

As described in the embodiments, the controlling unit 140 performs a process related to the configuration used for the user equipment 20 to perform the D2D communication. Furthermore, the controlling unit 140 performs a process related to a determination of a resource used for transmitting a synchronization signal and broadcast information for D2D communication. Furthermore, the controlling unit 140 transmits scheduling for D2D communication to the user equipment 20 through the transmitting unit 110. A functional unit related to signal transmission in the controlling unit 140 may be included in the transmitting unit 110, and a functional unit related to signal reception in the controlling unit 140 may be included in the receiving unit 120.

### <User equipment 20>

Fig. 11 is a diagram illustrating an example of a functional configuration of the user equipment 20. As illustrated in Fig. 11, the user equipment 20 has a transmitting unit 210, a receiving unit 220, a setting unit 230, and a controlling unit 240. The functional configuration illustrated in Fig. 11 is merely an example. As long as the operation according to the embodiments of the present invention can be executed, the functional classification and the name of the functional unit may be any classification and name.

The transmitting unit 210 generates a transmission signal from transmission data and transmits the transmission signal wirelessly. The receiving unit 220 wirelessly receives various types of signals, and acquires a signal of a higher layer from a received signal of a physical layer. The receiving unit 220 also has a function of receiving the NR-PSS, the NR-SSS, the NR-PBCH, the DL/UL/SL control signal, a reference signal, or the like transmitted from the base station apparatus 10. Furthermore, for example, the transmitting unit 210 may transmit a physical sidelink control channel (PSCCH), a physical sidelink shared channel (PSSCH), a physical sidelink discovery channel (PSDCH), a physical sidelink broadcast channel (PSBCH), and the like to any other user equipment 20 as the D2D communication, and the receiving unit 220 receives the PSCCH, the PSSCH, the PSDCH, the PSBCH, and the like from any other user equipment 20.

The setting unit 230 stores various types of configuration information received from the base station apparatus 10 or the user equipment 20 through the receiving unit 220 in the storage device and reads the configuration information from the storage device if necessary. The setting unit 230 also stores pre-configured configuration information. For example, content of the configuration information is, for example, information related to the configuration of the D2D communication or the like.

The controlling unit 240 controls D2D communication with other user equipment 20 as described above in the embodiments. Furthermore, the controlling unit 240 performs a process related to a determination of a resource used for transmission of a synchronization signal and broadcast information for D2D communication. Furthermore, the controlling unit 240 may perform scheduling of D2D communication. A functional unit related to signal transmission in the controlling unit 240 may be included in the transmitting unit 210, and a functional unit related to signal reception in the controlling unit 240 may be included in the receiving unit 220.

### <Hardware configuration>

The block diagrams (FIG. 10 and FIG. 11) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

For example, the base station apparatus 10, the user equipment 20, or the like in an embodiment of the present invention may function as a computer for performing a process of radio communication method according to the present disclosure. Fig. 10 is a diagram illustrating an example of a hardware configuration of the base station apparatus 10 and the user equipment 20 according to an embodiment of the present disclosure. Each of the base station apparatus 10 and the user equipment 20 described above may be physically configured as a computer device including a processor 1001, a storage apparatus 1002, an auxiliary storage apparatus 1003, a communication apparatus 1004, an input apparatus 1005, an output apparatus 1006, a bus 1007, and the like.

In the following description, the term "device" can be read as a circuit, device, unit, or the like. The hardware configuration of each of the base station apparatus 10 and the user equipment 20 may be configured to include each device depicted, or may be configured without including some devices.

Each function in each of the base station apparatus 10 and the user equipment 20 is implemented such that predetermined software (program) is read on hardware such as the processor 1001, the storage apparatus 1002 and the like, and the processor 1001 performs an operation and controls communication by the communication apparatus 1004 and at least one of reading and writing of data in the storage apparatus 1002 and the auxiliary storage apparatus 1003.

For example, the processor 1001 operates an operating system and controls the entire computer. The processor 1001 may be configured with a central processing unit (CPU) including an interface with a peripheral device, a control device, an operation device, a register, and the like. For example, the above-described controlling unit 140, the controlling unit 240, and the like may be implemented by the processor 1001.

Furthermore, the processor 1001 reads a program (program code), a software module, data, or the like from at least one of the auxiliary storage apparatus 1003 and the communication apparatus 1004 out to the storage apparatus 1002, and executes various types of processes according to them. A program causing a computer to execute at least some of the operations described in the above embodiments is used as the program. For example, the controlling unit 140 of the base station apparatus 10 illustrated in Fig. 8 may be implemented by a control program which is stored in the storage apparatus 1002 and operates on the processor 1001. Furthermore, for example, the controlling unit 240 of the user equipment 20 illustrated in Fig. 9 may be implemented by a control program which is stored in the storage apparatus 1002 and operates on the processor 1001. Various types of processes are described to be executed by one processor 1001 but may be executed simultaneously or sequentially by two or more processors 1001. The processor 1001 may be implemented by one or more chips. The program may be transmitted from a network via an electric communication line.

The storage apparatus 1002 is a computer readable recording medium and configured with at least one of a read only memory (ROM), an erasable programmable ROM (EPROM), an electrically erasable programmable ROM (EEPROM), a random access memory (RAM), and the like. The storage apparatus 1002 is also referred to as a "register," a "cache," a "main memory," or the like. The storage apparatus 1002 can store programs (program codes), software modules, or the like which are executable for carrying out the communication method according to an embodiment of the present disclosure.

The auxiliary storage apparatus 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The auxiliary storage apparatus 1003 is also referred to as an "auxiliary storage device." The above-described storage medium may be, for example, a database, a server, or any other appropriate medium including at least one of the storage apparatus 1002 and the auxiliary storage apparatus 1003.

The communication apparatus 1004 is hardware (a transmitting and receiving device) for performing communication between computers via at least one of a wired network and a wireless network and is also referred to as a "network device," a "network controller," a "network card," a "communication module," or the like. The communication apparatus 1004 may be configured to include a high frequency switch, a duplexer, a filter, a frequency synthesizer, and the like to implement at least one of frequency division duplex (FDD) and time division duplex(TDD). For example, transmitting and receiving antennas, an amplifier, a transceiver, a transmission line interface, and the like may be implemented by the communication apparatus 1004. The transceiver may be implemented such that a transmitter and a receiver are physically or logically separated.

The input apparatus 1005 is an input device that receives an input from the outside (such as a keyboard, a mouse, a microphone, a switch, a button, a sensor, or the like). The output apparatus 1006 is an output device that performs an output to the outside (for example, a display, a speaker, an LED lamp, or the like). The input apparatus 1005 and the output apparatus 1006 may be integrally configured (for example, a touch panel).

The respective devices such as the processor 1001 and the storage apparatus 1002 are connected by the bus 1007 to communicate information with each other. The bus 1007 may be configured with a single bus or may be configured with different buses between the devices.

Furthermore, each of the base station apparatus 10 and the user equipment 20 may be configured to include hardware such as a microprocessor, a digital signal processor (DSP), an application specific integrated circuit (ASIC), a programmable logic device (PLD), or a field programmable gate array (FPGA), or all or some of the functional blocks may be implemented by hardware. For example, the processor 1001 may be implemented by at least one of these pieces of hardware.

### (Conclusion of the embodiments)

As described above, according to the embodiments of the present invention, there is provided a user equipment including a receiving unit that receives information specifying a resource group for transmitting a plurality of blocks including a sidelink synchronization signal and sidelink broadcast information, wherein, for the plurality of blocks, different beams of one set of a plurality of beams are applied; a controlling unit that selects a plurality of resources for transmitting the plurality of blocks in accordance with the information specifying the resource group; and a transmitting unit that transmits the plurality of blocks including the sidelink synchronization signal and the sidelink broadcast information to another user equipment using the selected plurality of resources.

According to the above-described configuration, an overhead of a control signal can be reduced that is for specifying a plurality of resources for transmitting a plurality of blocks including a sidelink synchronization signal and sidelink broadcast information to which one set of a plurality of different beams is applied.

The information specifying the resource group may be at least one of a starting location of the resource group; a number of the plurality of blocks; a number of consecutively allocated blocks among the plurality of blocks; a period of the resource group; and a starting location of the resource group in a frequency direction. According to the above-described configuration, an overhead of a control signal can be reduced that is for specifying a plurality of resources for transmitting a plurality of blocks including a sidelink synchronization signal and sidelink broadcast information to which one set of a plurality of different beams is applied.

The receiving unit may receive a time division multiplex frame configuration or a time and frequency location of a block including a downlink synchronization signal and downlink broadcast information, and the controlling unit may exclude, based on the time division multiplex frame configuration or the time and frequency location of the block including the downlink synchronization signal and the downlink broadcast information, a portion of a plurality of resources included in a radio frame, and the controlling unit may select, in accordance with the information specifying the resource group, a plurality of resources for transmitting the plurality of blocks. According to this configuration, interference for transmitting a plurality of blocks including a sidelink synchronization signal and sidelink broadcast information can be reduced.

When the controlling unit does not exclude the portion of the plurality of resources among resources included in the resource group, the controlling unit may allocate a resource assumed to be allocated at a location of the portion of the plurality of resources at an allocatable resource location that follows the location of the portion of the plurality of resources with respect to time. According to this configuration, interference for transmitting a plurality of blocks including a sidelink synchronization signal and sidelink broadcast information can be reduced.

According to the embodiments of the present invention, there is provided a communication method by a user equipment, the method including receiving information specifying a resource group for transmitting a plurality of blocks including a sidelink synchronization signal and sidelink broadcast information, wherein, for the plurality of blocks, different beams of one set of a plurality of beams are applied; selecting a plurality of resources for transmitting the plurality of blocks in accordance with the information specifying the resource group; and transmitting the plurality of blocks including the sidelink synchronization signal and the sidelink broadcast information to another user equipment using the selected plurality of resources. According to the above-described configuration, an overhead of a control signal can be reduced that is for specifying a plurality of resources for transmitting a plurality of blocks including a sidelink synchronization signal and sidelink broadcast information to which one set of a plurality of different beams is applied.

### (Supplemental embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station apparatus 10 and the user equipment 20 have been described using the functional block diagrams, but such devices may be implemented by hardware, software, or a combination thereof. Software executed by the processor included in the base station apparatus 10 according to the embodiment of the present invention and software executed by the processor included in the user equipment 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Furthermore, a notification of information is not limited to the aspect or embodiment described in the present disclosure and may be provided by any other method. For example, the notification of information may be given by physical layer signaling (for example, downlink control information (DCI) or uplink control information (UCI)), upper layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an RRC message and may be, for example, an RRC connection setup message, an RRC connection reconfiguration message, or the like.

Each aspect and embodiment described in the present disclosure may be applied to at least one of Long Term Evolution (LTE), LTE-advanced (LTE-A), SUPER 3G, IMT-advanced, 4G (4th generation mobile communication system), 5G (5th generation mobile communication system), Future Radio Access (FRA), NR (new Radio), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The processing procedures, the sequences, the flowcharts, and the like of the respective aspects/embodiments described in this specification may be reversed in order provided that there is no contradiction. For example, the method described in the present disclosure presents elements of various steps with an exemplary order and is not limited to a presented specific order.

In this specification, a specific operation to be performed by the base station apparatus 10 may be performed by an upper node in some cases. In the network including one or more network nodes including the base station apparatus 10, various operations performed for communication with the user equipment 20 can be obviously performed by at least one of the base station apparatus 10 and any network node (for example, an MME, an S-GW, or the like is considered, but it is not limited thereto) other than the base station apparatus 10. A case is exemplified above in which there is one network node other than the base station apparatus 10. The one network node may be a combination of a plurality of other network nodes (e.g., MME and S-GW).

Information, a signal, or the like described in the present disclosure may be output from an upper layer (or a lower layer) to a lower layer (or an upper layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

Information, signals, and the like described in this disclosure may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or any combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC) may be referred to as a "carrier frequency," a "cell," or the like.

The terms "system" and "network" used in the present disclosure are used interchangeably.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names assigned to the various channels and the information elements are not limited in any respect.

In the present disclosure, the terms "base station (BS)," "radio base station," "base station apparatus," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base stations may also be indicated by terms such as a macrocell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device which need not necessarily move during a communication operation. For example, at least one of the base station and the mobile station may be an Internet of things (IoT) device such as a sensor.

Further, the base station in the present disclosure may be replaced with a user terminal. For example, each aspect/embodiment of the present disclosure may be applied to a configuration in which communication between the base station and the user terminal is replaced with communication between a plurality of units of user equipment 20 (for example, which may be referred to as device-to-device (D2D) or vehicle-to-everything (V2X)). In this case, the user equipment 20 may have the functions of the base station 10 described above. Further, the terms "uplink" and "downlink" may be replaced with terms (for example, "side") corresponding to inter-terminal communication. For example, an uplink channel, a downlink channel, or the like may be read with side channels.

Similarly, the user terminal in the present disclosure may be replaced with the base station. In this case, the base station may have the functions of the above-mentioned user terminal.

The term "determining" used in this specification may include a wide variety of actions. For example, "determining" may include, for example, events in which events such as judging, calculating, computing, processing, deriving, investigating, looking up, search, and inquiry (for example, looking up in a table, a database, or another data structure), or ascertaining are regarded as "determining." Further, "determining" may include, for example, events in which events such as receiving (for example, receiving information), transmitting (for example, transmitting information), input, output, or accessing (for example, accessing data in a memory) are regarded as "determining." Further, "determining" may include, for example, events in which events such as resolving, selecting, choosing, establishing, or comparing are regarded as "determining." In other words, "determining" may include events in which a certain operation is regarded as "determining." Further, "determining" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case in which used in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS and may be referred to as a pilot, depending on a standard to be applied.

A phrase "based on" used in the present disclosure is not limited to "based only on" unless otherwise stated. In other words, a phrase "based on" means both "based only on" and "based on at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Further, "means" in the configuration of each of the above devices may be replaced with "unit," "circuit," "device," or the like.

In a case in which "include," "including," and variations thereof are used in the present disclosure, these terms are intended to be comprehensive, similar to a term "provided with (comprising)." Further, the term "or" used in the present disclosure is intended not to be an exclusive OR.

A radio frame may include one or more frames in the time domain. In the time domain, each of one or more frames may be referred to as a sub frame. The sub frame may further include one or more slots in the time domain. The sub frame may have a fixed time length (for example, 1 ms) not depending on numerology.

The numerology may be a communication parameter applied to at least one of transmission and reception of a certain signal or channel. For example, the numerology may indicate at least one of a sub carrier spacing (SCS), a bandwidth, a symbol length, a cyclic prefix length, a transmission time interval (TTI), a number of symbols per TTI, a radio frame configuration, a specific filtering process performed in the frequency domain by a transceiver, a specific windowing process performed in the time domain by a transceiver, and the like.

The slot may include one or more symbols (orthogonal frequency division multiplexing (OFDM) symbols, single carrier frequency division multiple access (SC-FDMA) symbols, or the like) in the time domain. The slot may be a time unit based on the numerology.

The slot may include a plurality of mini slots. Each mini slot may include one or more symbols in the time domain. Further, the mini slot may be referred to as a sub-slot. The mini slot may include fewer symbols than a slot. A PDSCH (or PUSCH) transmitted in units of times greater than the mini slot may be referred to as a PDSCH (or PUSCH) mapping type A. A PDSCH (or PUSCH) transmitted using a mini slot may be referred to as a PDSCH (or PUSCH) mapping type B.

All of a radio frame, a sub frame, a slot, a mini slot, and a symbol indicates a time unit for transmitting a signal. As a radio frame, a sub frame, a slot, a mini slot, and a symbol, different designations respectively corresponding to them may be used.

For example, one sub frame may be referred to as a transmission time interval (TTI: Transmission Time Interval), or a plurality of consecutive sub frames may be referred to as TTIs, or one slot or one mini slot may be referred to as a TTI. In other words, at least one of the sub frame and the TTI may be a sub frame (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the sub frame.

Here, for example, the TTI refers to a minimum time unit of scheduling in wireless communication. For example, in the LTE system, the base station performs scheduling of allocating a radio resource (a frequency bandwidth, a transmission power, or the like which can be used in each user equipment 20) to each user equipment 20 in units of TTIs. The definition of the TTI is not limited thereto.

The TTI may be a transmission time unit such as a channel coded data packet (transport block), a code block, or a code word, or may be a processing unit such as scheduling or link adaptation. Further, when a TTI is given, a time interval (for example, the number of symbols) in which a transport block, a code block, a code word, or the like is actually mapped may be shorter than the TTI.

Further, when one slot or one mini slot is referred to as a TTI, one or more TTIs (that is, one or more slots or one or more mini slots) may be a minimum time unit of scheduling. Further, the number of slots (the number of mini slots) constituting the minimum time unit of scheduling may be controlled.

A TTI having a time length of 1 ms may be referred to as a common TTI (TTI in LTE Rel. 8 to 12), a normal TTI, a long TTI, a common sub frame, a normal sub frame, a long sub frame, a slot, or the like. A TTI shorter than the common TTI may be referred to as a reduced TTI, a short TTI, a partial TTI (a partial or fractional TTI), a reduced sub frame, a short sub frame, a mini slot, a sub slot, a slot, or the like.

Further, a long TTI (for example, a common TTI, a sub frame, or the like) may be replaced with a TTI having a time length exceeding 1 ms, and a short TTI (for example, a reduced TTI or the like) may be replaced with a TTI having a TTI length which is less than a TTI length of a long TTI and equal to or more than 1 ms.

The resource block (RB) is a resource allocation unit in the time domain and the frequency domain and may include one or more consecutive subcarriers in the frequency domain. The number of sub carriers included in an RB may be the same irrespective of a numerology and may be, for example, 12. The number of sub carriers included in an RB may be determined based on a numerology.

Further, a time domain of an RB may include one or more symbols and may be a length of one slot, one mini slot, one sub frame, or one TTI. Each of one TTI, one sub frame, or the like may be constituted by one or more resource blocks.

Further, one or more RBs may be referred to as a physical resource block (PRB), a sub carrier group (SCG), a resource element group (REG), a PRB pair, or the like.

Further, the resource block may be constituted by one or more resource elements (RE). For example, one RE may be a radio resource region of one subcarrier and one symbol.

A bandwidth part (BWP) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and it may not be assumed that the UE transmits and receives a predetermined signal/channel outside an active BWP. Further, a "cell," a "carrier," or the like in the present disclosure may be replaced with a "BWP."

Structures of the radio frame, the sub frame, slot, the mini slot, and the symbol are merely examples. For example, configurations such as the number of sub frames included in a radio frame, the number of slots per sub frame or radio frame, the number of mini slots included in a slot, the number of symbols and RBs included in a slot or a mini slot, the number of sub carriers included in an RB, the number of symbols in a TTI, a symbol length, a cyclic prefix (CP) length, and the like can be variously changed.

In the entire present disclosure, for example, when an article such as "a," "an," or "the" in English is added by a translation, the present disclosure may include a case in which a noun following the article is the plural.

In the present disclosure, a term "A and B are different" may mean "A and B are different from each other." Further, the term may mean "each of A and B is different from C." Terms such as "separated," "coupled," or the like may also be interpreted in similarly to "different."

Each aspect/embodiment described in this specification may be used alone, in combination, or may be switched in accordance with the execution. Further, notification of predetermined information (for example, notification of "being X") is not limited to being performed explicitly, but is performed by implicit (for example, not notifying the predetermined information) It is also good.

Further, in the present disclosure, the DL-SSB is an example of a block including the synchronization signal and the broadcast information in downlink. The SL-SSB is an example of a block including the synchronization signal and the broadcast information in sidelink.

Although the present disclosure is described above in detail, it is obvious to those skilled in the art that the present disclosure is not limited to the embodiments described in the present disclosure. The present disclosure may be implemented as revised and modified embodiments without departing from the gist and scope of the present disclosure as set forth in claims. Accordingly, the description of the present disclosure is for the purpose of illustration and does not have any restrictive meaning to the present disclosure.

### LIST OF REFERENCE SYMBOLS

10 base station apparatus
110 transmitting unit
120 receiving unit
130 setting unit
140 controlling unit
20 user equipment
210 transmitting unit
220 receiving unit
230 setting unit
240 controlling unit
1001 processor
1002 storage apparatus
1003 auxiliary storage apparatus
1004 communication apparatus
1005 input apparatus
1006 output apparatus

## Claims

1. A terminal (20) comprising:
a receiving unit (220) configured to receive information related to a resource for transmitting a block including a synchronization signal and broadcast information for inter-terminal communication; and
a control unit (240) configured to determine a slot for transmitting the block in accordance with the information related to the resource, characterized
wherein the information related to the resource includes a slot offset from a start of a radio frame.

2. The terminal (20) according to claim 1, wherein the information related to the resource includes a time interval between blocks.

3. A communication method executed by a terminal (20), the method comprising:
receiving information related to a resource for transmitting a block including a synchronization signal and broadcast information for inter-terminal communication; and
determining a slot for transmitting the block in accordance with the information related to the resource, characterized
wherein the information related to the resource includes a slot offset from a start of a radio frame.

4. A communication system comprising:
a terminal (20A) including a receiving unit (220) configured to receive information related to a resource for transmitting a block including a synchronization signal and broadcast information in inter-terminal communication; and
a control unit (240) configured to determine a slot for transmitting the block in accordance with the information related to the resource, wherein the information related to the resource includes a slot offset from a start of a radio frame, and
another terminal (20B) including a receiving unit (220) configured to receive the block including the synchronization signal and the broadcast information in the inter-terminal communication.

## Patentansprüche

1. Endgerät (20), umfassend:
eine Empfangseinheit (220), die so konfiguriert ist, dass sie Informationen in Bezug auf eine Ressource zum Übertagen eines Blocks empfängt, der ein Synchronisationssignal und Rundfunkinformationen für eine Kommunikation zwischen Endgeräten einschließt; und
eine Steuereinheit (240), die so konfiguriert ist, dass sie einen Slot zum Überragen des Blocks in Übereinstimmung mit den Informationen in Bezug auf die Ressource bestimmt, gekennzeichnet
wobei die Informationen in Bezug auf die Ressource einen Slot-Versatz von einem Beginn eines Funkrahmens einschließen.

2. Endgerät (20) nach Anspruch 1, wobei die Informationen in Bezug auf die Ressource ein Zeitintervall zwischen Blöcken einschließen.

3. Kommunikationsverfahren, das von einem Endgerät (20) ausgeführt wird, wobei das Verfahren Folgendes umfasst:
Empfangen von Informationen in Bezug auf eine Ressource zum Übertragen eines Blocks, der ein Synchronisationssignal und Rundfunkinformationen für eine Kommunikation zwischen Endgeräten einschließt; und
Bestimmen eines Slots zum Übertragen des Blocks in Übereinstimmung mit den Informationen in Bezug auf die Ressource, gekennzeichnet
wobei die Informationen in Bezug auf die Ressource einen Slot-Versatz von einem Beginn eines Funkrahmens einschließen.

4. Kommunikationssystem, umfassend:
ein Endgerät (20A), das eine Empfangseinheit (220) einschließt, die so konfiguriert ist, dass sie Informationen in Bezug auf eine Ressource zum Übertragen eines Blocks empfängt, der ein Synchronisationssignal und Rundfunkinformationen in Kommunikation zwischen Endgeräten einschließt; und
eine Steuereinheit (240), die so konfiguriert ist, dass sie einen Slot zum Überragen des Blocks in Übereinstimmung mit den Informationen in Bezug auf die Ressource bestimmt, wobei die Informationen in Bezug auf die Ressource einen Slot-Versatz von einem Beginn eines Funkrahmens einschließen, und
ein anderes Endgerät (20B), das eine Empfangseinheit (220) einschließt, die so konfiguriert ist, dass sie den Block empfängt, der das Synchronisationssignal und die Rundfunkinformationen in der Kommunikation zwischen Endgeräten einschließt.

## Revendications

1. Terminal (20) comprenant :
une unité (220) de réception configurée pour recevoir des informations relatives à une ressource pour l'envoi d'un bloc incluant un signal de synchronisation et des informations de diffusion pour la communication interterminal ; et
une unité (240) de commande configurée pour déterminer un intervalle d'envoi du bloc conformément aux informations relatives à la ressource, caractérisée
dans lequel les informations relatives à la ressource incluent un décalage d'intervalle à partir d'un début d'une trame radio.

2. Terminal (20) selon la revendication 1, dans lequel les informations relatives à la ressource incluent un intervalle de temps entre les blocs.

3. Procédé de communication exécuté par un terminal (20), le procédé comprenant :
la réception d'informations relatives à une ressource pour l'envoi d'un bloc incluant un signal de synchronisation et des informations de diffusion pour la communication interterminal ; et
la détermination d'un intervalle d'envoi du bloc conformément aux informations relatives à la ressource, caractérisé
dans lequel les informations relatives à la ressource incluent un décalage d'intervalle à partir d'un début d'une trame radio.

4. Système de communication comprenant :
un terminal (20A) incluant une unité (220) de réception configurée pour recevoir des informations relatives à une ressource pour envoyer un bloc incluant un signal de synchronisation et des informations de diffusion dans la communication interterminal ; et
une unité (240) de commande configurée pour déterminer un intervalle d'envoi du bloc conformément aux informations relatives à la ressource, dans lequel les informations relatives à la ressource incluent un décalage d'intervalle à partir d'un début d'une trame radio, et
un autre terminal (20B) incluant une unité (220) de réception configurée pour recevoir le bloc incluant le signal de synchronisation et les informations de diffusion dans la communication interterminal.
